(19) Europäisches Patentamt
European Patent Office
Office européen des brevets

(11) EP 0 447 848 B1

(12) EUROPÄISCHE PATENTSCHRIFT

(45) Veröffentlichungstag und Bekanntmachung des Hinweises auf die Patenterteilung:
**11.09.2002 Patentblatt 2002/37**

(51) Int Cl.⁷: **G01N 21/88**, G01N 21/47

(21) Anmeldenummer: **91102967.6**

(22) Anmeldetag: **27.02.1991**

(54) **Verfahren zum Kalibrieren von Scannern und Anordnung zum Erzeugen definierter Streulichtamplituden**

Scanner calibration method and apparatus for generating defined amplitudes of scattered light

Procédé pour calibrer des scanneurs et appareil pour générer des amplitudes définis de lumière diffusée

(84) Benannte Vertragsstaaten:
**CH DE FR GB IT LI**

(30) Priorität: **05.03.1990 CH 68590**

(43) Veröffentlichungstag der Anmeldung:
**25.09.1991 Patentblatt 1991/39**

(73) Patentinhaber: **TENCOR INSTRUMENTS**
**Mountain View, CA 94043 (US)**

(72) Erfinder:
- **Malin, Cosmas**
  **FL-9493 Mauren (LI)**
- **Hoyle, Philip**
  **FL-9490 Vaduz (LI)**

(74) Vertreter: **Fiener, Josef et al**
**Patentanwälte**
**Kahler, Käck, Fiener et col.,**
**P.O. Box 12 49**
**87712 Mindelheim (DE)**

(56) Entgegenhaltungen:
**EP-B- 0 146 005**
**EP-B- 0 200 918**
**US-A- 4 314 763**
**US-A- 4 360 275**
**US-A- 4 512 659**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zum Kalibrieren von Scannern und eine Anordnung zum Erzeugen definierter Streulichtamplituden, zur Messung von Partikeln und Oberflächenbeschaffenheiten bei der Inspektion von Sustraten, insondere von Wafern.

Geräte, die auf der Messung des elastischen Streulichts basieren, werden u.a. für die Messungen von Partikeln in Luft oder auf Oberflächen oder zur Inspektion von Oberflächen eingesetzt (US-PS 4,314,763).

In solchen Geräten wird dabei das zu betrachtende Gebiet mit einer Lichtquelle hoher Intensität beleuchtet und das gestreute Licht -z.B. über eine Dunkelfeldoptik- einem Photosensor zugeführt. Der Photosensor (Photodiode, Photomultiplier) erzeugt ein elektrisches Signal, das proportional zur Streulichtamplitude ist und einem nachfolgenden Verstärker zugeführt wird. Unter der Annahme, dass das Streuvermögen eines Defekts zu dessen Grösse in Relation steht, lassen sich über die Streulichtamplitude Rückschlüsse auf die Ausdehnung des Defekts ziehen.

Diese Messmethode hat aber den Nachteil, dass Intensitätsschwankungen der Lichtquelle, Veränderungen in der Optik (z.B. Dunkelfeldoptik oder Lichtquellenjustierung) und elektronisches Driften im Photodetektor oder im Verstärker, das Messresultat am Ausgang des Verstärkers beeinflussen.

Aus diesem Grunde wird mittels verschiedener Korrekturmethoden versucht, solche Veränderungen zu kompensieren.

Eine solche Korrekturmethode besteht in der regelmässigen Messung der Intensität der Lichtquelle. Schwankungen in der Intensität können dann beispielsweise über Veränderungen der Empfindlichkeit des Photodetektor oder des Verstärkers kompensiert werden. Diese Korrekturmethode hat allerdings den Nachteil, dass die Veränderungen in der Optik, im Photodetektor oder im Verstärker, nicht erkannt und nicht berücksichtigt werden.

Besser geeignet als Korrekturmethode sind daher Verfahren, die die Gesamtheit von Lichtquelle, Optik, Photodetektor und Verstärker zur Eichung bzw. Messung mit einbeziehen.

Solche Verfahren verwenden dazu ein Medium von bekanntem Streuvermögen (Referenzmedium) (wie z.B. in US-PS 4,512,659 oder der EP-A-0200918 beschrieben). Ueblicherweise wird dabei auf dem bekannten Medium die Empfindlichkeit vom Photodetektor und vom Verstärker solange verändert, bis der erwünschte Wert am Ausgang des Verstärkers vorliegt, wobei gemäß der EP-A-0200918 mittels eines optischen Abschwächers der Streulichtanteil bestimmt bzw. verändert wird. Bei einem solchen Verfahren hängt damit die Genauigkeit der Kalibrierung noch vom Streuvermögen des Referenzmediums ab.

Sollen aber nach dieser Messmethode sehr empfindliche Streulichtgeräte geeicht werden, sind die Anforderungen an das Referenzmedium besonders hoch anzusetzen, denn ein Referenzmedium das sehr niedere Streulichtamplituden erzeugt, ist äusserst anfällig auf Veränderungen (siehe insbes.z.B.in US-PS 4,512,659 beschrieben).

Ist das Referenzmedium z.B. eine Oberfläche mit sehr niedrigem Streuvermögen, so verändern Partikel, Luftfeuchtigkeit, Oxidation, etc dessen Streuvermögen drastisch.

Zudem ist die Reinigung entsprechend empfindlicher Oberflächen sehr aufwendig und muss in speziellen Reinigungsprozessen schrittweise durchgeführt werden. Besonders nachteilig wirken sich dabei Verschmutzungen durch Partikel aus, wenn das beleuchtete Feld klein ist. In diesem Fall kann ein einzelner Partikel das Streuvermögen der Oberflächen, um Grössenordnungen verändern.

Schliesslich limitiert die Herstellbarkeit so vorbereiteter Oberflächen mit entsprechend geringem Streuvermögen die Anwendungsmöglichkeit dieser Methode.

Es ist daher Aufgabe der vorliegenden Erfindung, ein Verfahren bzw. eine Anordnung der eingangs erwähnten Art zu schaffen, das die in der Lage ist, besonders kleine, einstellbare und definierte Streulichtamplituden zu erzeugen ohne dabei auf Verschmutzungen anfällig zu sein.

Das erfindungsgemässe Verfahren und die entsprechende Anordnung sind in Anspruch 1 bzw. Anspruch 2 definiert.

Diese Anordnung erfasst daher sämtliche möglichen Driftquellen. Das hat den sehr wesentlichen Vorteil, dass eine solche Anordnung mit sehr geringen Streulichtamplituden arbeiten kann. Die Anordnung ist daher bezüglich der Empfindlichkeit, Genauigkeit und Zuverlässigkeit weitgehend unempfindlich gegen Verschmutzungen und ist einfach reinigbar. Zudem lassen sich mit einer solchen Anordnung die gewünschten Streulichtwerte über einen beinahe unbegrenzten Bereich einfach einstellen.

Zwei Ausführungsbeispiele der Erfindung werden im folgenden unter Bezugnahme auf die Zeichnungen näher beschrieben. Es zeigen:

Fig. 1 Eine Gesamtdarstellung einer Wafer-Inspektionseinrichtung,in der eine erfindungsgemässe Anordnung zur Anwendung kommt;

Fig. 2 eine Prinzipdarstellung des Standes der Technik;

Fig. 3 ein Ausführungsbeispiel einer erfindungsgemässen Anordnung;

Fig. 4 ein Ausführungsbeispiel ähnlig der EP-A-0200918 zur grundsätzlichen Erläuterung der Anordnung;

Fig. 5a ein Detail-Schaltbild aus dem Ausführungsbeispiel,

5b eine Photomultiplier-Kennlinie,

5c eine Ausgangskennlinie bei veränderter Photomultiplier Beschleunigungsspannung;

Fig. 6a ein erstes Flussdiagramm eines Steuerungsablaufs eines automatischen Kalibriervorganges des optischen Filters;

Fig. 6b ein zweites Flussdiagramm eines Steuerungsablaufs eines automatischen Kalibriervorganges zur Ermittlung des Umrechnungsfaktors für die Skalierung der Messresultate;

Fig. 7 eine Darstellung des Zusammenhangs zwischen Partikelgrösse und Streulichtintensität.

Fig. 1 zeigt eine Substrat-Oberflächen-Inspektionsgerät, wie es hauptsächlich zur Inspektion von Wafern zur Anwendung kommt. Neben kleinsten Partikeln können mit solchen Einrichtungen Kristallfehler, metallische Verunreinigungen, Polierfehler, Kratzer, Implantationsinhomogenitäten und andere Effekte auf Wafern visualisiert werden. Die notwendige Reinheit zur Durchführung von solchen Messungen wird durch eine Flow-Box und ein aerodynamisch transparentes Design gewährleistet.

**Fig. 2** zeigt eine Prinzipdarstellung des Standes der Technik eines Oberflächen-Inspektionsgerätes, das auf dem Prinzip der Messung der elastischen Streuung beruht. Eine Lichtquelle (Laserlicht) 1 beleuchtet eine punktförmige Stelle 2 auf einer Wafer-Oberfläche 3. Das reflektierte Licht verlässt die Anordnung in Richtung des Pfeiles. Ein Teil 4 des von der Oberfläche gestreuten Lichtes wird durch eine Optik 5 gesammelt und in einen Photodetektor 7 abgebildet. Ein Ausgangssignal 8 des Photodetektors 7 wird einem Verstärker 9 zugeführt. Dabei liegt nun die Wafer-Oberfläche 3 in der sogenannten Fokus-Ebene 10. Kommt nun an der beleuchteten Stelle 2 ein Defekt vor, so steigt der Anteil des gestreuten Lichtes 4 an und die Intensität des auf den Photodetektors 7 gelangenden Lichtes nimmt zu. Die Spannung 11 am Ausgang des Verstärkers 9 steigt damit ebenfalls an.

**Fig. 3** zeigt eine Anordnung aus einer Oberflächen-Inspektions-Einrichtung zum Erzeugen definierter Streulichtamplituden. Das von einem Laser 20 ausgestrahlte Licht gelangt durch ein optisches Filter 21 (beispielsweise ein Abschwächer oder ein Neutralfilter) über eine Strahlumlenkung 22 (z.B.Spiegel oder Prisma) zu einer Sammellinse 23.

Diese fokusiert das Licht zu einem beleuchteten Fleck 24. Dieser liegt in der Fokusebene 10. Während des Inspektionsvorganges liegt die zu inspizierende Wafer-Oberfläche 3 in der Fokus-Ebene 10. Der von der Wafer-Oberfläche 3 gestreute Teil 4 des gestreuten Lichtes gelangt durch die Sammellinse 23 und die Blende 6 zum Photodetektor 7. Die Oeffnung 25 der Blende 6 liegt im Abbild 26 des ersten beleuchteten Fleckes 24 (konfokales System) und hat in etwa dessen Form und Abmessungen. Während der Kalibrierphase wird ein Referenzmedium 27 vorzugsweise unterhalb der Fokus-Ebene 10 angeordnet.

Da damit das Referenzmedium 27 ausserhalb der Fokus-Ebene 10 liegt, ist ein zweiter beleuchteter Fleck 28 ausdehnungsmässig grösser als der erste beleuchtete Fleck 24 in der Fokus-Ebene 10. Gleichfalls ist in der Kalibrierphase die so erhellte Stelle 29 am Ort der Blende 6 grösser als das Abbild 26.

Da die Oeffnung 25 der Blende 6 immer noch gleich gross ist, gelangt nunmehr nur ein sehr geringer Anteil des gestreuten Lichtes durch die Oeffnung 25 der Blende 6 zum Photodetektor 7.

Mit Hilfe des optischen Filters 21 und/oder dem Verlagern aus der Fokus-Ebene 10 wird somit ein Abschwächmechanismus gebildet.

Zusätzlich wird durch das Auslagern aus der Fokusebene 10 (Defokusierung) und der damit verbundenen Vergrösserung des beleuchteten Fleckes 24 die örtliche Stabilitätsforderung eliminiert.

Ferner bewirkt ein streuendes Referenzmedium aus dem Volumen -ein Referenzmedium 27, dessen Streuvermögen nicht nur auf die Oberfläche 30 beschränkt ist, sondern dessen Volumen 31 einen wesentlichen Teil des Streuvermögens ausmacht (Milch, Milchglas)-einerseits in sich eine Defokusierung und andererseits verhindert es, dass das Streuverhalten durch äusserliche Einflüsse verändert werden kann.

Durch die Verstellung der Position des Referenzmediums 27 entlang der optischen Achse 32 kann die Grösse der erhellten Stelle 29 an der Stelle der Blende 6 variiert werden.

Bei konstanten Abmessungen der Oeffnung 25 der Blende 6 kann somit die Menge der auf den Photodetektor 7 eintreffenden Energie reguliert werden.

Der Einstellvorgang läuft in der Praxis nach folgendem Procedere ab: Zunächst wird die Intensität E1 des die Wafer-Oberfläche 3 beleuchtenden Lichtes ermittelt. Danach wird auf dem mit E1 beleuchteten Referenzmedium 27 die Intensität E2 des durch die Oeffnung 25 der Blende 6 zum Photodetektor 7 gelangenden Lichtes gemessen. Der Verhältnisfaktor, ermittelt aus den beiden Intensitäten E1 und E2, ergibt den prozentualen Anteil des zum Photodetektor 7 gelangenden Anteils des Streulichtes vom Referenzmedium 27.

Die Höhe des Referenzmediums 27 kann nun so eingestellt werden, dass der gewünschte Anteil E0 an Streulicht stets auf dem Referenzmedium zum Photodetektor gelangt.

Alle zur Inspektion anstehenden Oberflächen werden dann in Relation zu E0 gebracht.

Damit liegen reproduzierbare und stabile Werte für die Oberflächen-Charakterisierung vor.

Im Ausführungsbeispiel ist ein Verstellmechanismus 37 vorgesehen, bei dem auf einer über eine Stellschraube 33 in der Höhe verstellbaren Auflage 34 das Referenzmedium 27 -bestehend aus Oberfläche 30 und Volumen 31- angeordnet ist. Die höhenverstellbare Auflage weist einen Rand 38 auf, der das Ausstrahlen von unerwünschtem Streulicht in ungewollte Richtungen verhindert.

Die Höheneinstellung lässt sich in diesem Ausführungsbeispiel mittels einer Klemmschraube 35 fixieren.

Es ist im übrigen durchaus möglich zwischen Lichtquelle 20 und Strahlumlenkung 22 wenigstens ein beugendes Element 36 (z.B. eine Linse) zu integrieren.

Natürlich können die hier beschriebenen Linsen, Laserquellen, Blenden, optische Filter und Referenzmedien als ganze Systeme aufgebaut sein und sind das in der Praxis auch. So ist beispielsweise mit *eine Linse* meistens ein ganzes Linsen-System gemeint, der Laser in Praxis eine Laserquelle, die aus zwei einzelnen Quellen mit verschiedenem Laserlicht aufgebaut.

Die Darstellung in **Fig. 4** unterscheidet sich von der in Fig. 3 dargestellten Anordnung dadurch, dass das Laserlicht 42 durch eine zweite Sammelinse 40 auf die Wafer-Oberfläche 3 fokusiert wird, dass die Oberfläche 30 des Referenzmediums 27 in der Fokus-Ebene 10 liegt und, dass ein optischer Abschwächer 41 im Abbildungsteil (zwischen Strahlumlenkung 22 und Sammellinse 23 oder zwischen Photosensor 7 und Sammellinse 23) des gestreuten Anteils 4 vorgesehen ist.

Die übrigen Betrachtungselemente und Ueberlegungen sind genau gleich wie bei Fig. 3.

Der in **Fig. 5a** beschriebene Schaltungsteil umfasst eine Beschaltung eines Photomultipliers üblicher Bauart mit einem ersten Anschluss 50, an dem die negative Kathodenbeschleunigungs-Spannung Uc anlegbar ist. Die Dynoden-Spannungen werden über die Widerstände R1 bis Rn, die zwischen Uc und Masse 51 liegen, abgegriffen. Der von der Lichtintensität E und der Beschleunigungsspannung Uc abhängige Anodenstrom Ia wird durch einen Strom-Spannungswandler in die Ausgangsspannung Ua umgewandelt.

Die typische (logarithmische) Abhängigkeit der Verstärkung eines Photomultipliers von der Beschleunigungsspannung Uc wird in **Fig. 5b** gezeigt.

Die Kurvendarstellung in **Fig. 5c** zeigt den Zusammenhang zwischen Ausgangsspannung Ua und Beschleunigungsspannung Uc bei konstanter Lichtintensität E.

Der Photodetektor im beschriebenen Ausführungsbeispiel ist ein Photomultiplier, dessen Verstärkung über die Beschleunigungsspannung Uc gesteuert wird. Um die Verstärkung über den gesamten Beschleunigungsspannungs-Bereich ermitteln zu können, werden zusätzliche Angaben benötigt, deren Herleitung in der Art, wie sie den **Figuren 6a und 6b** der Flussdiagramme entnommen werden kann, ermittelt werden.

Für die Kalibrierung ist es wichtig, dass der Photomultiplier möglichst in dem Empfindlichkeitsbereich geeicht wird, in dem er bei der Messung betrieben wird.

In der vorliegenden Anordnung wird daher mittels eines optischen Filters (Abschwächer) die auf den Photomultiplier gelangende Intensität abgeschwächt.

**Fig. 6a** zeigt die Ermittlung des Abschwächungsfaktors: Zunächst wird die Beschleunigungsspannung so eingestellt, dass die Ausgangsspannung Ua möglichst hoch ist, ohne in die Sättigung des Verstärkers 9 zu fahren. Die so gemessene Ausgangsspannung U1 wird gespeichert, der Abschwächer wird in den Strahlengang gebracht, und am Ausgang des Verstärkers liegt nunmehr die Spannung U2 an. Das Verhältnis der beiden Spannungen U1 und U2 entspricht dem Abschwächungsfaktor cA des optischen Filters.

$$(1) \qquad cA = U1 / U2$$

Die Verstärkung V des Photomultipliers beträgt

$$(2) \qquad V = c \;.\; Uc\ EXP(a.n)$$

wobei n die bekannte Anzahl von Dynoden des Photomultipliers, a und c vom Photomultiplier abhängige Unbekannte sind.

**Fig. 6b** wird im Detail das Verfahren angewendet, mit dem die Unbekannten so bestimmt werden, dass die Verstärkung V bei jeder Beschleunigungsspannung Uc errechnet werden kann.

Bei eingefahrenem Abschwächer wird die Ausgangsspannung Ua über den gesamten Dynamikbereich (0.....Umax) des Verstärkers 9 ermittelt. Dies wird durch schrittweises Erhöhen der Beschleunigungsspannung Uc realisiert. Nach jeder schrittweisen Veränderung der Beschleunigungsspannung Uc wird die Ausgangsspannung Ua registriert.

Die Beziehung zwischen Beschleunigungsspannung Uc und Ausgangsspannung Ua ist nach (2)

$$(3) \qquad Ua = c \;.\; Uc\ EXP\ (a.n)$$

Durch Logarithmierung von (3) erhält man die lineare Beziehung

$$(4) \qquad LOG(Ua) = a \;.\; n \;.\; LOG(Uc) + LOG(c)$$

mit der Steigung m und Ordinatenabschnitt b

$$(5) \qquad m = a \;.\; n$$

(6) b = LOG(c)

**Fig. 5c** zeigt die graphische Darstellung von auf obige Art ermittelter Werte. Mittels linearer Regression können aus den Messwerten m und b bestimmt werden.
Aus den nunmehr bestimmten Werten kann ein Faktor z gebildet werden, mit dem eine bestimmte Ausgangsspannung Ua multipliziert wird, um bei einer Beschleunigungsspannung Uc den streuenden Anteil einer beliebigen Wafer-Oberfläche 3 berechnen zu können:

(7) z = E0 / (cA . EXP(m . LOG(Uc) + b))

Der Streulichtanteil Ex einer beliebigen Wafer-Oberfläche 3 ist daher:

(8) Ex = z . Ua

**Fig. 7** zeigt den Zusammenhang zwischen Partikelgrösse (Latex-Kugeln) und Streulicht-Intensität. Dieser Zusammenhang stellt den Schlüssel dar, um mit den oben angeführten Streulichtanteilswerten die Grösse von Partikeln zu ermitteln.
Diese Kurve muss für jede Maschinentype nur einmalig ermittelt werden.

## Patentansprüche

1. Verfahren zum Kalibrieren von Scannern zur Messung von Partikelgrößen und/oder Oberflächenbeschaffenheiten bei der Inspektion von Substraten, wobei Licht von einer Lichtquelle (20) auf ein stark streuendes Referenzmedium (27) mit bekanntem Streuvermögen geleitet wird und von einem Photodetektor (7) erfaßt wird, sowie die Intensität (E1) des das Referenzmedium (27) beleuchtenden Lichtes und die Intensität (E2) des von dem Referenzmedium (27) gestreuten und den Photodetektor (7) erreichenden Streulichtanteils (4) gemessen werden,
   **dadurch gekennzeichnet, daß**
   das Sammeln des von dem Referenzmedium (27) gestreuten Lichtanteils (4) mittels eines optischen Sammellinsensystems (23, 6) erfolgt, wobei das Referenzmedium (27) aus der Fokusebene (10) des Sammelsystems (23, 6) verlagert wird, um die lokale Abhängigkeit der Streulichtamplitude zu reduzieren.

2. Anordnung, insbesondere bei Wafer-Inspektions-Einrichtungen zur Durchführung des Verfahrens nach Anspruch 1, umfassend ein stark streuendes Referenzmedium (27) mit bekanntem Streuvermögen und eine Lichtquelle (20) zur Beleuchtung des Referenzmediums (27), sowie einen Photodetektor (7) zum Erfassen des von dem Referenzmedium (27) gestreuten Lichtanteils (4),
   **gekennzeichnet durch**
   Mittel zur Defokusierung des von dem Referenzmedium (27) gestreuten Lichtanteils (4) bezüglich des Photodetektors (7) und ein optisches Sammellinsensystem (23, 6) zur Bündelung des gestreuten Lichtanteils (4) auf den Photodetektor (7) hin, wobei das optische Sammellinsensystem (23, 6) eine Fokusebene (10) und eine Abbildebene (29) aufweist und die Mittel zur Defokusierung einen Verstellmechanismus (37) zur Verlagerung des Referenzmediums (27) aus der Fokusebene (10) des optischen Sammellinsensystems (23, 6) aufweisen.

3. Anordnung nach Anspruch 2,
   **dadurch gekennzeichnet, daß**
   das Referenzmedium (27) Milchglas ist.

4. Anordnung nach Anspruch 2 oder 3,
   **dadurch gekennzeichnet, daß**
   das Referenzmedium (27) ein das Streuvermögen beeinflussendes Volumen (31) besitzt.

## Claims

1. A method for calibrating scanners for the measurement of particle sizes and/or surface finishs during the inspection of substrates, wherein light from a light source (20) is directed toward a super-scattering reference medium (27) of known scattering power and is detected by a photodetector (7), and furthermore, intensity (E1) of the light illuminating the reference medium (27) and intensity (E2) of the light scatter portion (4) scattered by the reference medium (27) and reaching the photodetector (7) are measured,
   **characterized in that**
   collecting the light portion (4) scattered by the reference medium (27) is performed by means of an optical focusing lens system (23, 6), said reference medium (27) being disposed out of the focal plane (10) of the collection system (23, 6) to reduce local dependence of the scattered light amplitude.

2. An arrangement, especially in wafer inspection means, for performing the method of claim 1, comprising a super-scattering reference medium (27) of known scattering power and a light source (20) for illuminating the reference medium (27) as well as a photodetector (27) for detecting the light portion (4) scattered by the reference medium (27),
   **characterized by**
   means for defocusing the light portion (4) scattered by the reference medium (27) with respect to the photodetector (7) and an optical focusing lens system (23, 6) for focusing the scattered light portion (4) toward the photodetector (7), said optical focusing lens system (23, 6) including a focal plane (10) and an image plane (29), and said means for defocusing including an adjusting mechanism (37) for defocusing the reference medium (27) out of the focal plane (10) of the optical focusing lens system (23, 6).

**3.** The arrangement of claim 2, **characterized in that** the reference medium (27) is a milk glass.

**4.** The arrangement of claim 2 or 3, **characterized in that** the reference medium (27) has a volume (31) affecting the scattering power.

## Revendications

**1.** Procédé pour calibrer des scanneurs en vue de mesurer des grosseurs de particules et/ou des propriétés superficielles lors de l'inspection de substrats, procédé dans lequel de la lumière émanant d'une source lumineuse (20) est dirigée vers un agent de référence (27) à forte diffusion et à capacité de dispersion connue et est captée par un photodétecteur (7), et dans lequel sont mesurées l'intensité (E1) de la lumière éclairant l'agent de référence (27), et l'intensité (E2) de la part (4) de lumière diffusée par l'agent de référence (27) et atteignant le photodétecteur (7),
**caractérisé par le fait que**
le regroupement de la part (4) de lumière diffusée par l'agent de référence (27) s'opère au moyen d'un système collecteur optique (23, 6) à lentille, l'agent de référence (27) étant décalé hors du plan de focalisation (10) du système collecteur (23, 6), de manière à diminuer la dépendance locale de l'amplitude de lumière diffusée.

**2.** Appareil équipant notamment des dispositifs d'inspection de galettes, pour la mise en oeuvre du procédé selon la revendication 1, comprenant un agent de référence (27) à forte diffusion et à capacité de dispersion connue et une source lumineuse (20) pour éclairer l'agent de référence (27), ainsi qu'un photodétecteur (7) pour capter la part (4) de lumière diffusée par ledit agent de référence (27),
**caractérisé par**
des moyens de défocalisation de la part (4) de lumière diffusée par l'agent de référence (27), vis-à-vis du photodétecteur (7), et un système collecteur optique (23, 6) à lentille pour concentrer la part (4) de lumière diffusée, en direction dudit photodétecteur (7), le système collecteur optique (23, 6) à lentille présentant un plan de focalisation (10) et un plan de reproduction (29), et les moyens de défocalisation comportant un mécanisme de réglage (37) en vue du décalage de l'agent de référence (27) hors du plan de focalisation (10) du système collecteur optique (23, 6) à lentille.

**3.** Appareil selon la revendication 2,
**caractérisé par le fait que**
l'agent de référence (27) est du verre opale.

**4.** Appareil selon la revendication 2 ou 3,
**caractérisé par le fait que**
l'agent de référence (27) possède un volume (31) influençant le pouvoir de diffusion.

Fig. 1

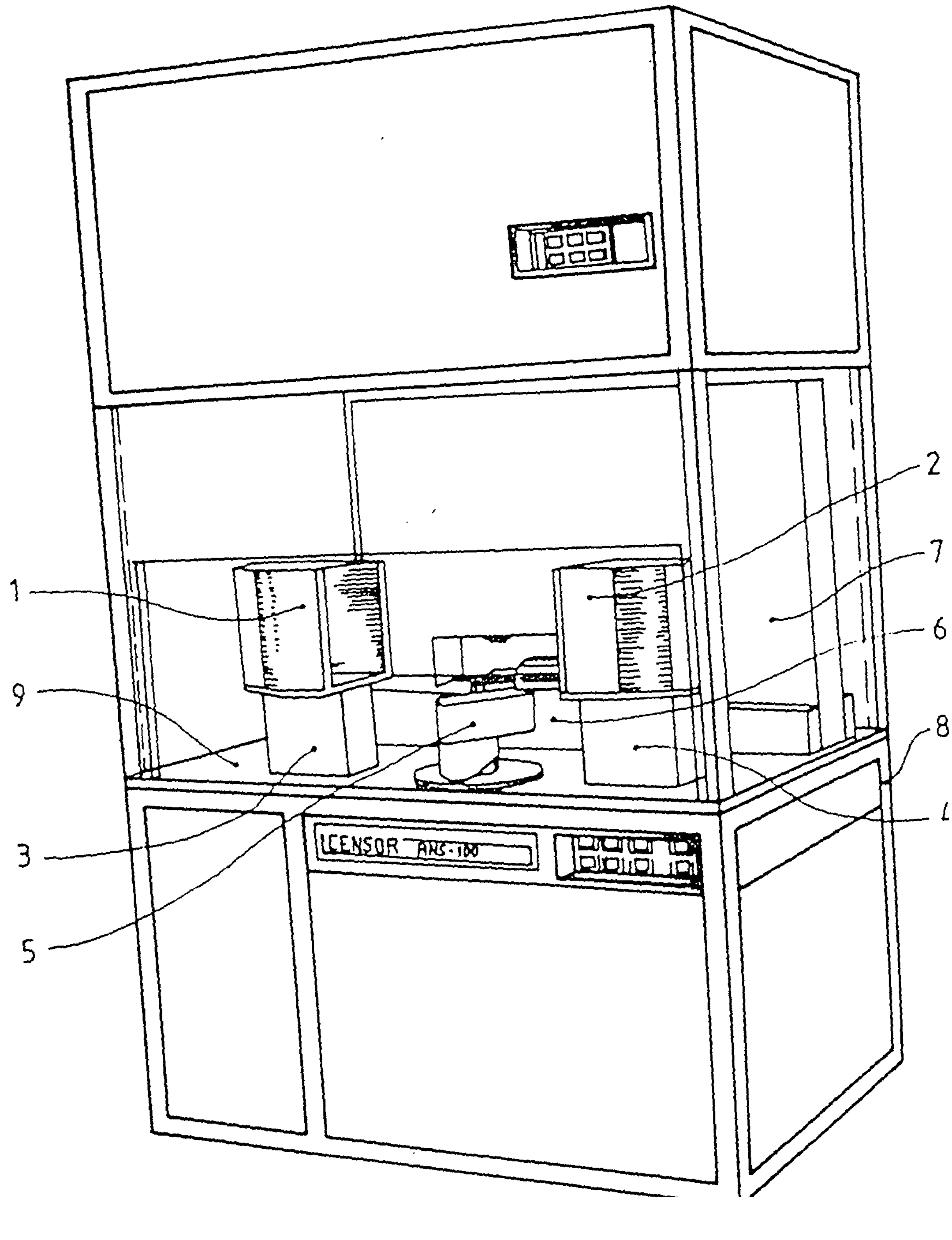

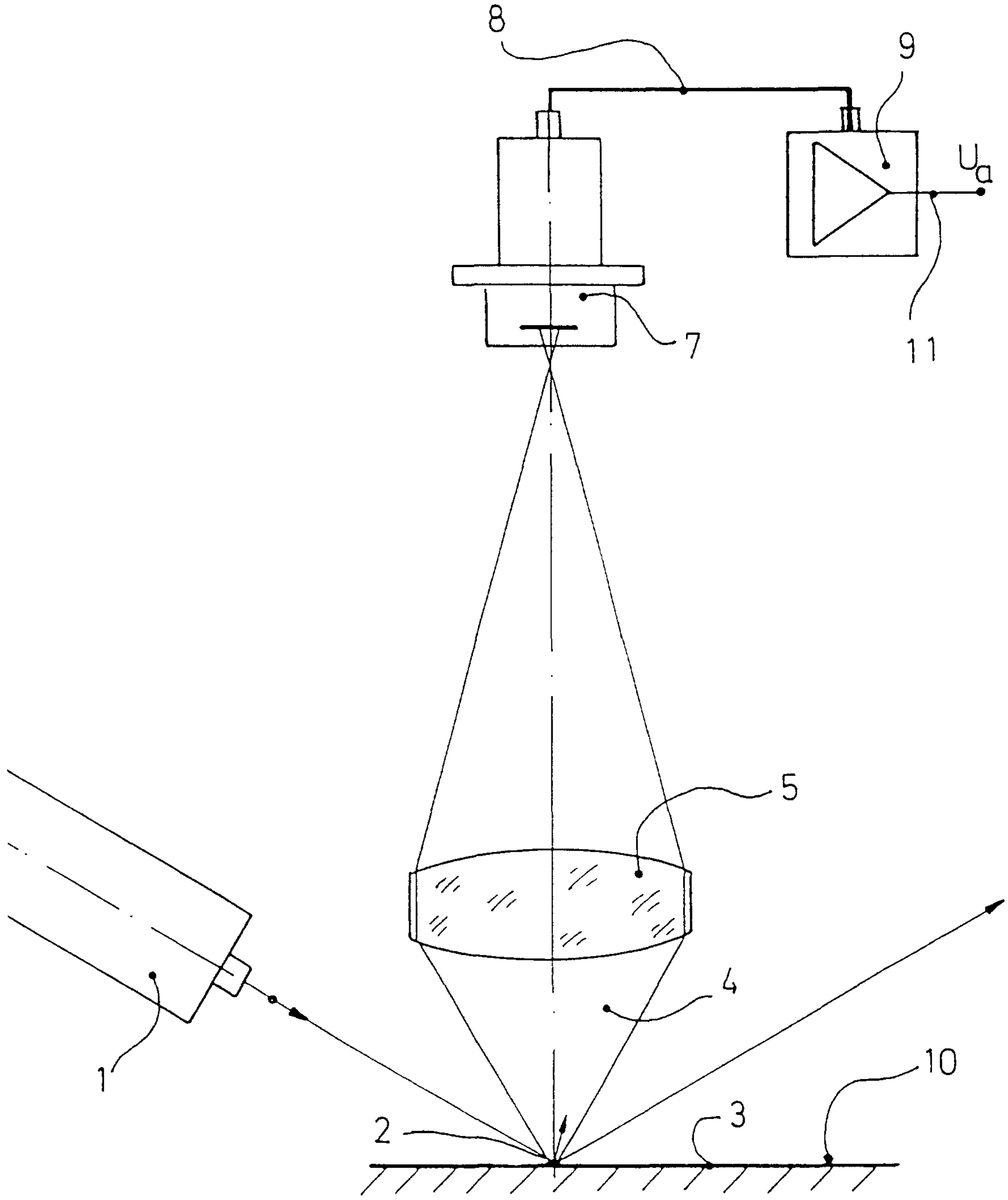


Fig. 2

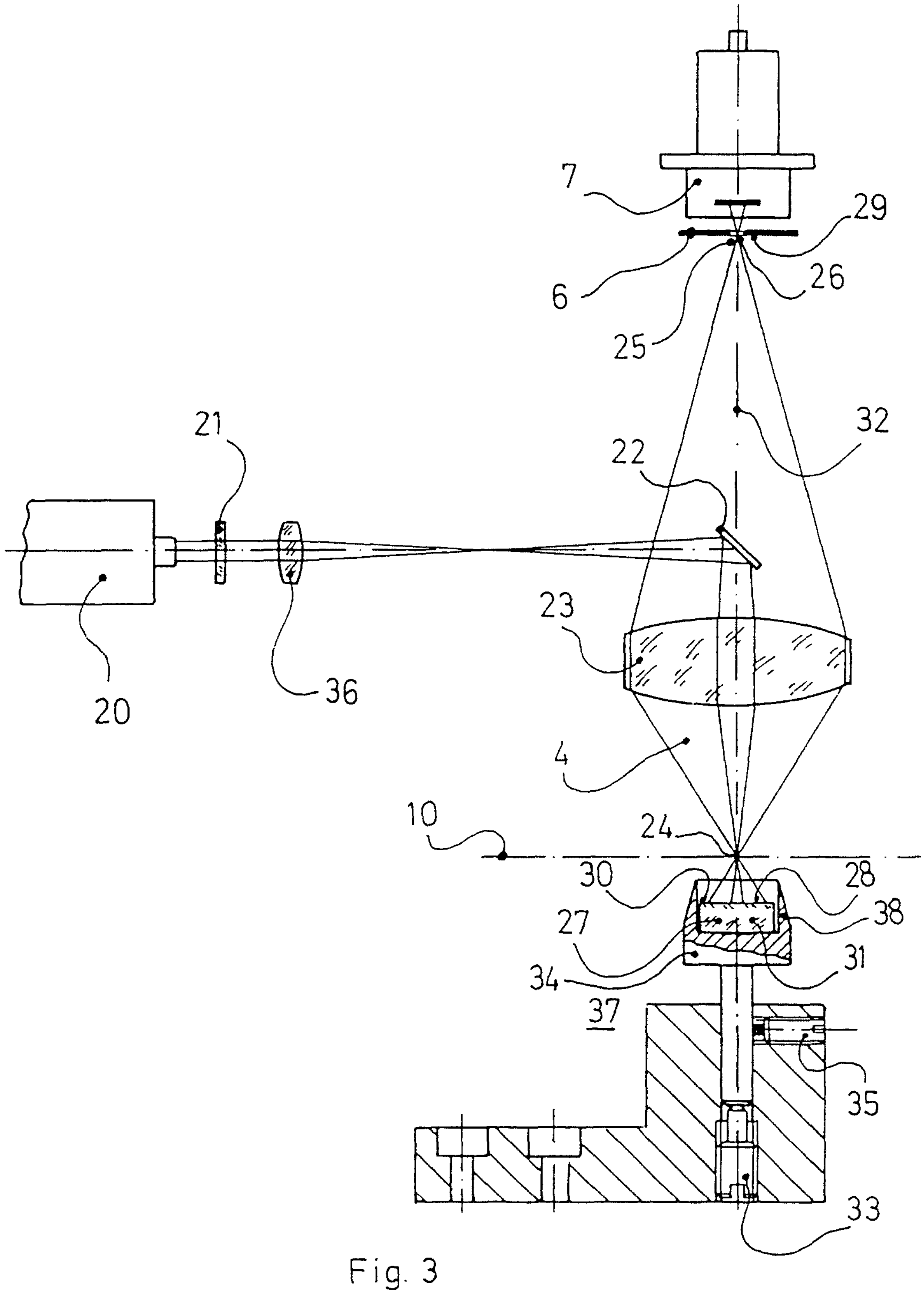


Fig. 3

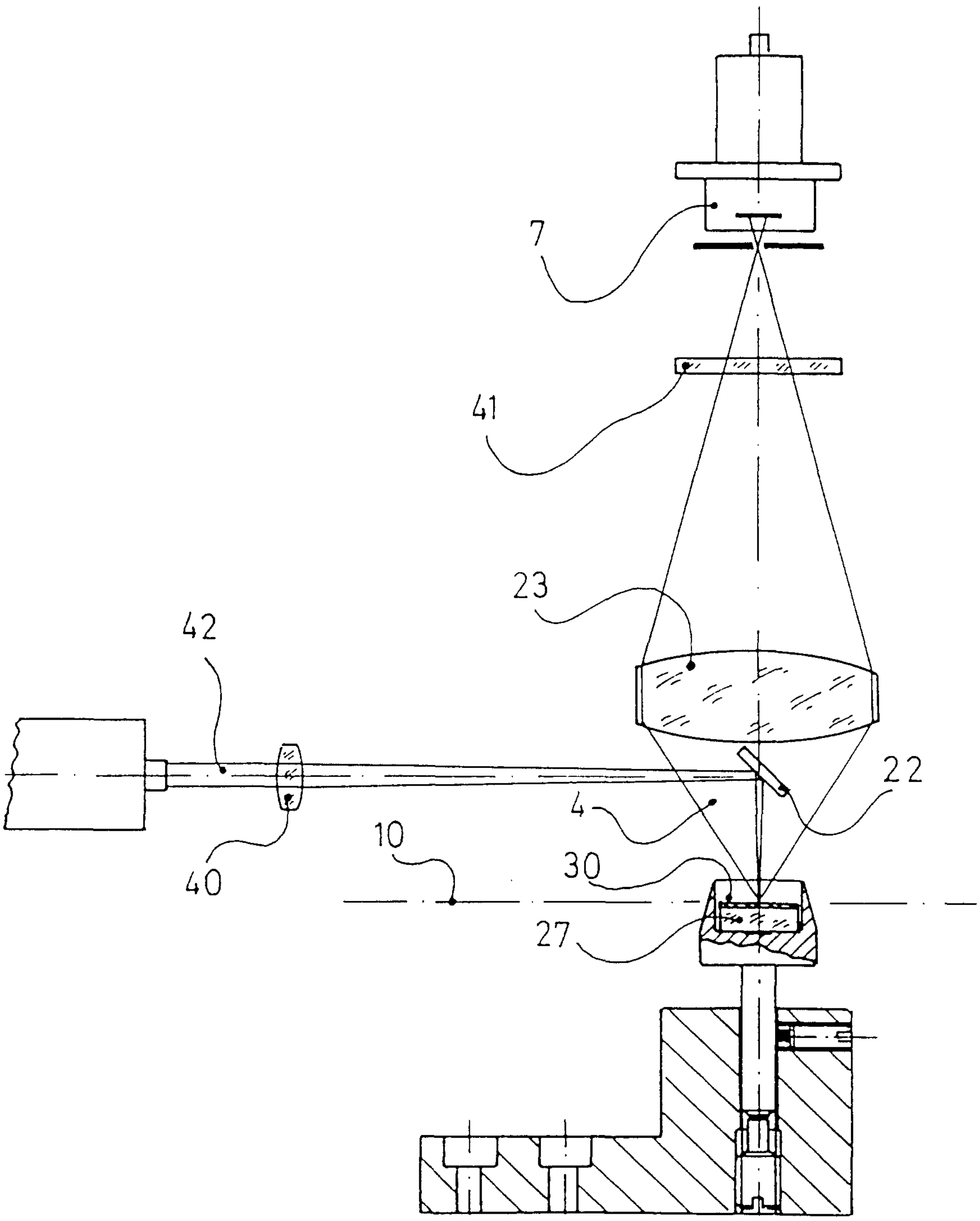


Fig. 4

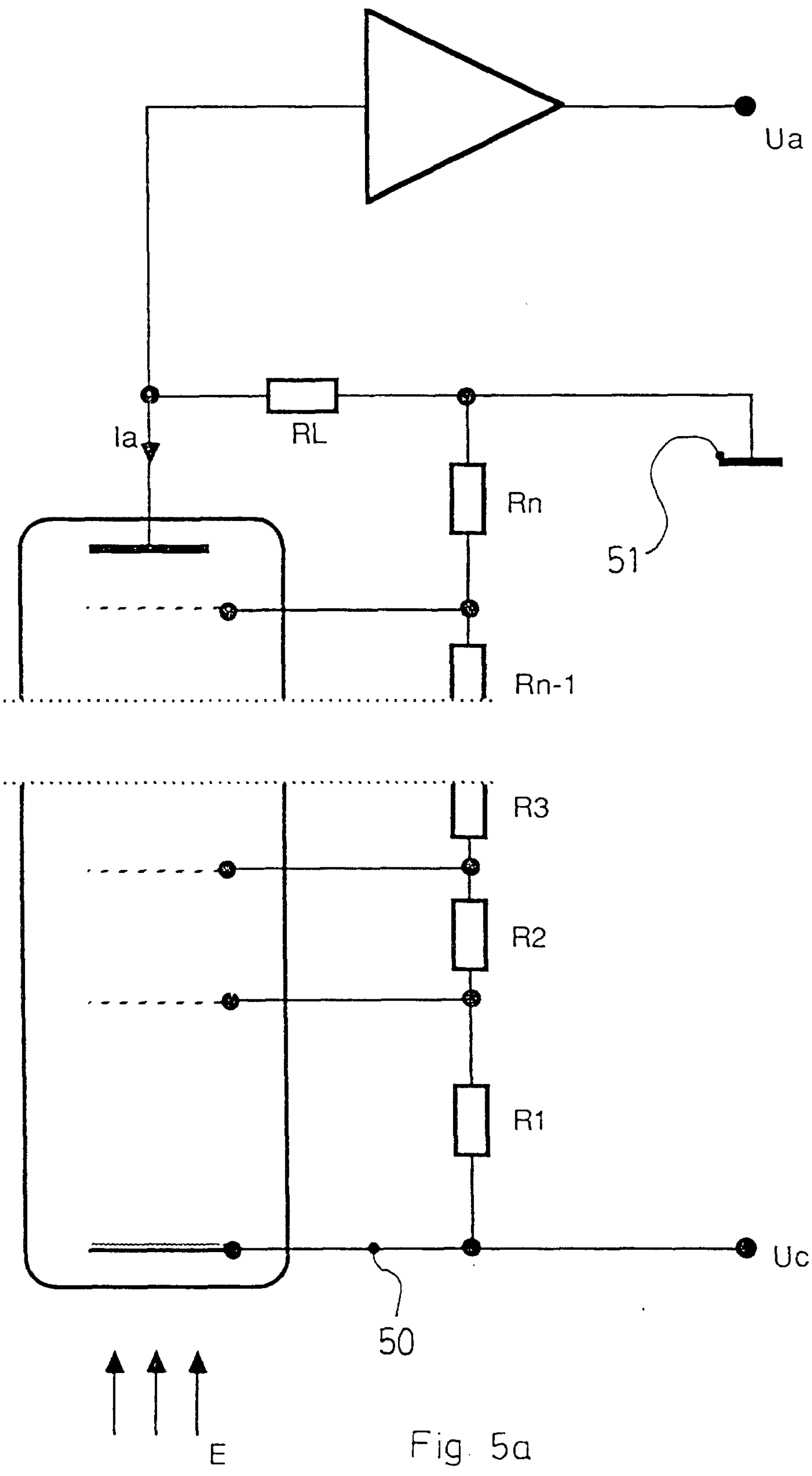


Fig. 5a

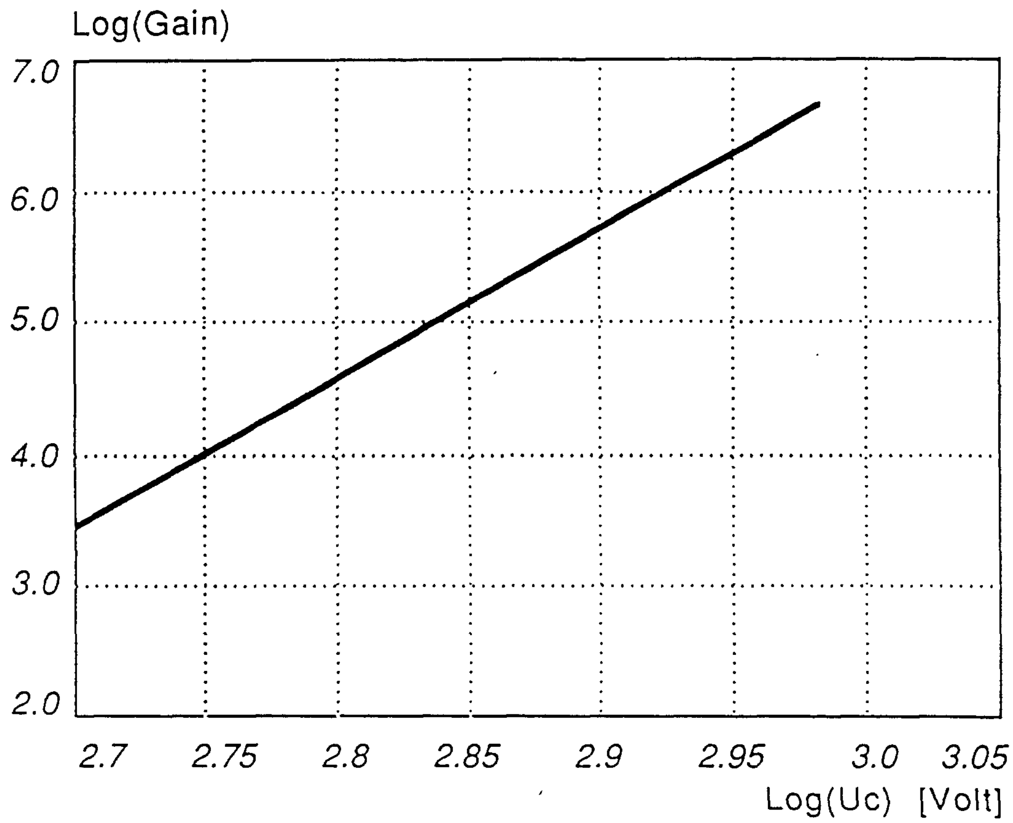


Fig. 5b

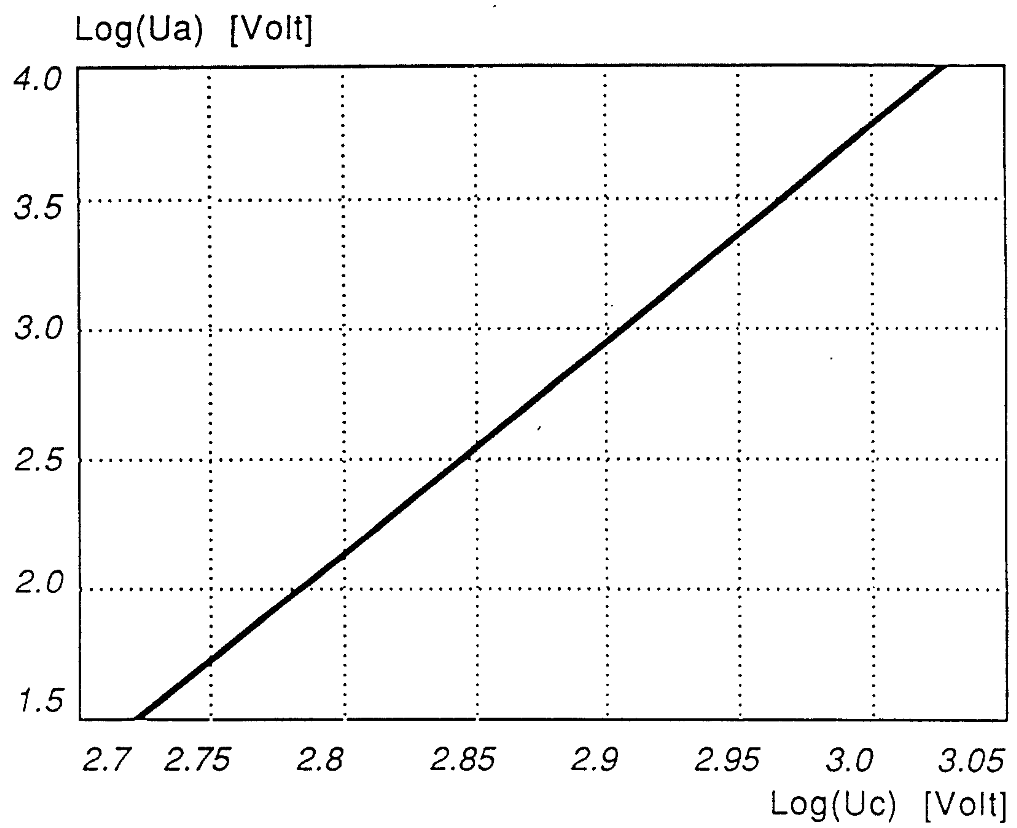
Log(Ua) [Volt]
4.0
3.5
3.0
2.5
2.0
1.5
2.7
2.75
2.8
2.85
2.9
2.95
3.0
3.05
Log(Uc) [Volt]

Fig. 5c

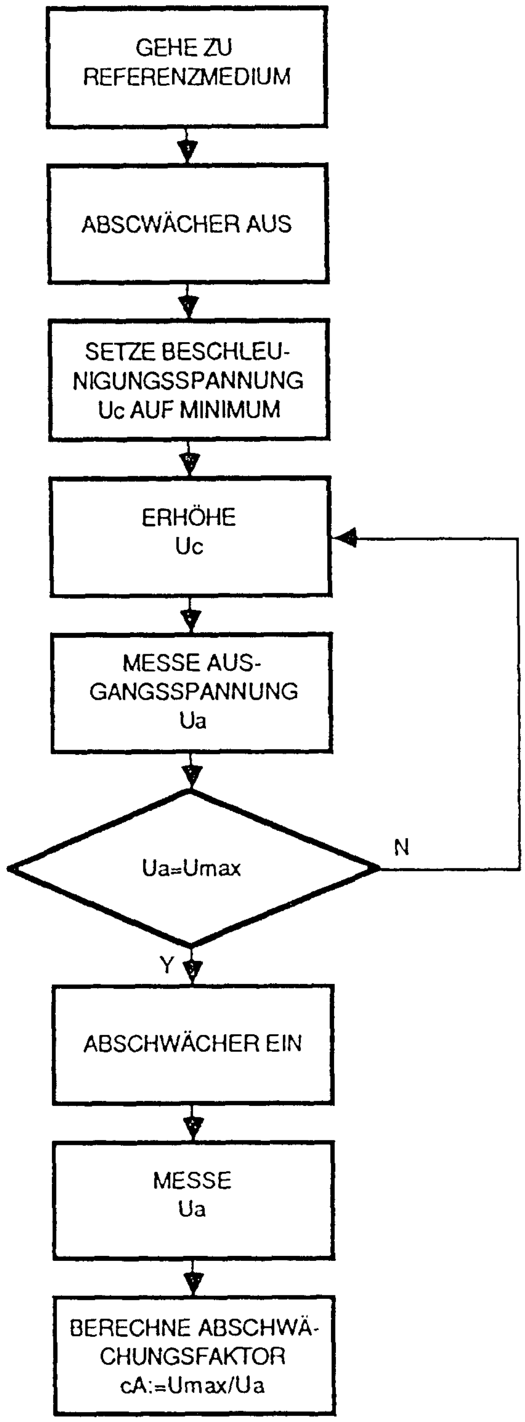
GEHE ZU REFERENZMEDIUM
ABSCWÄCHER AUS
SETZE BESCHLEU-NIGUNGSSPANNUNG Uc AUF MINIMUM
ERHÖHE Uc
MESSE AUS-GANGSSPANNUNG Ua
Ua=Umax
N
Y
ABSCHWÄCHER EIN
MESSE Ua
BERECHNE ABSCHWÄ-CHUNGSFAKTOR cA:=Umax/Ua

Fig. 6a

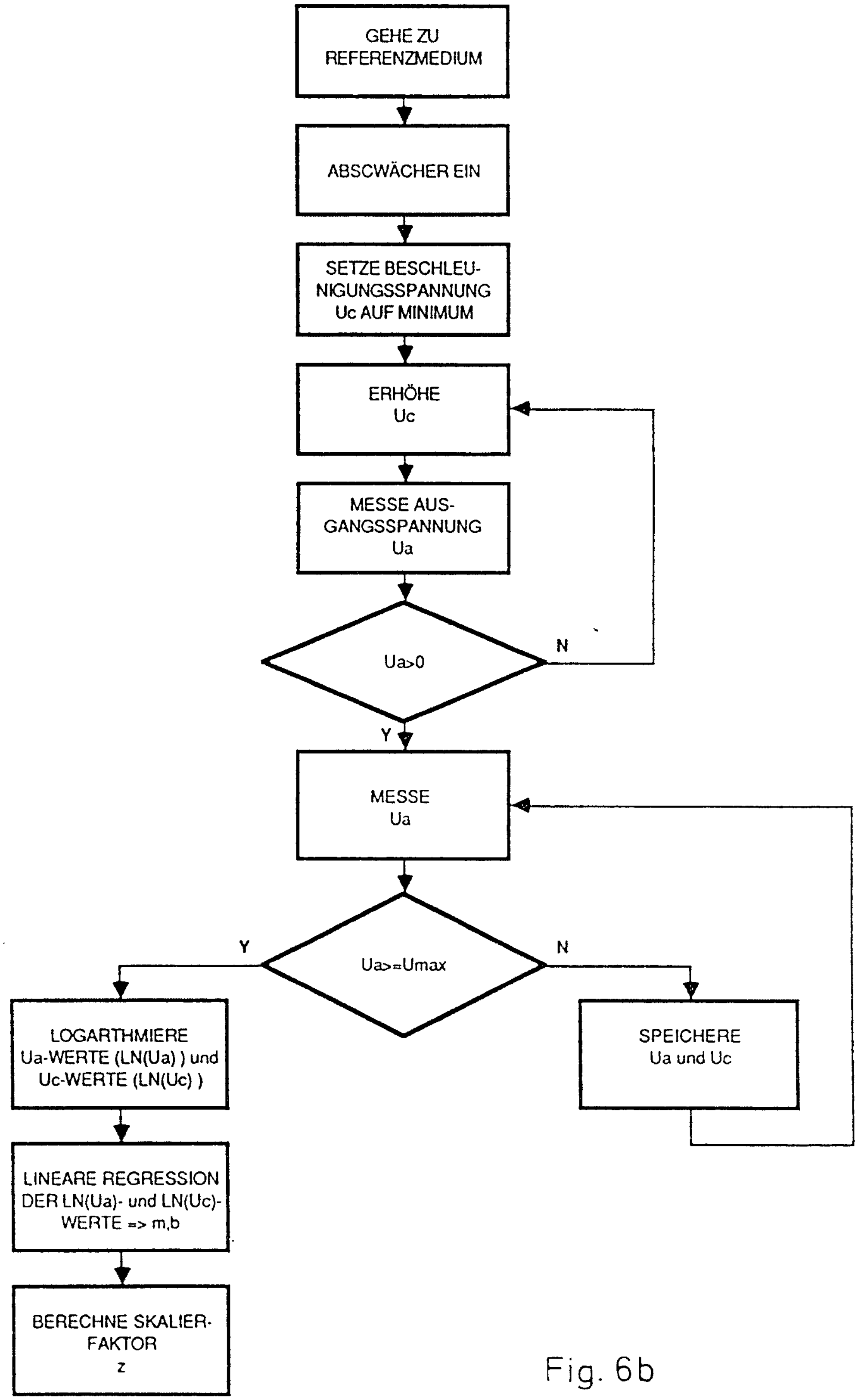
GEHE ZU REFERENZMEDIUM
ABSCWÄCHER EIN
SETZE BESCHLEU-NIGUNGSSPANNUNG Uc AUF MINIMUM
ERHÖHE Uc
MESSE AUS-GANGSSPANNUNG Ua
Ua>0
N
Y
MESSE Ua
Ua>=Umax
Y
N
LOGARTHMIERE Ua-WERTE (LN(Ua) ) und Uc-WERTE (LN(Uc) )
SPEICHERE Ua und Uc
LINEARE REGRESSION DER LN(Ua)- und LN(Uc)-WERTE => m,b
BERECHNE SKALIER-FAKTOR z

Fig. 6b

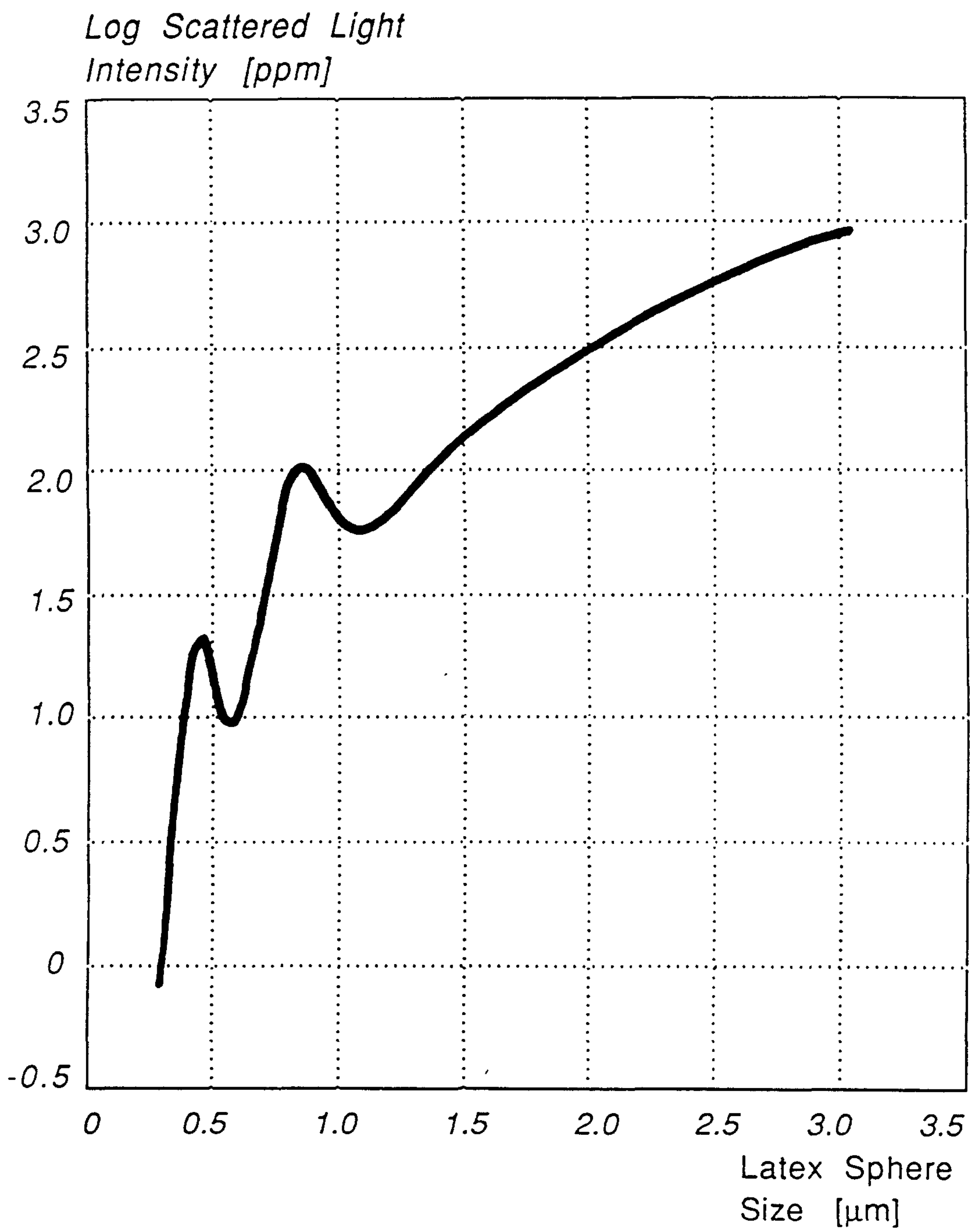
Log Scattered Light
Intensity [ppm]
3.5
3.0
2.5
2.0
1.5
1.0
0.5
0
-0.5
0
0.5
1.0
1.5
2.0
2.5
3.0
3.5
Latex Sphere
Size [μm]

Fig. 7